# EUROPÄISCHE PATENTSCHRIFT

(11) **EP 3 488 211 B1**
(45) Veröffentlichungstag und Bekanntmachung des Hinweises auf die Patenterteilung: **21.10.2020**
(21) Anmeldenummer: 17746424.5
(22) Anmeldetag: 20.07.2017
(51) Int. Cl.: G01M 15/14, F01D 21/00, G01S 13/00

(54) **VERFAHREN UND ANORDNUNG ZUR ÜBERWACHUNG EINES HEISSGASBEREICHS EINER GASTURBINE**
METHOD AND ASSEMBLY FOR MONITORING A HOT GAS REGION OF A GAS TURBINE
PROCÉDÉ ET SYSTÈME DE SURVEILLANCE D'UNE ZONE DE GAZ CHAUDS D'UNE TURBINE À GAZ

(30) Priorität: 31.08.2016 DE 102016216412
(43) Veröffentlichungstag der Anmeldung: 29.05.2019
(73) Patentinhaber: Siemens Aktiengesellschaft, 80333 München (DE)
(72) Erfinder: PFEIFER, Uwe, 12557 Berlin (DE); ZIROFF, Andreas, 81671 München (DE)
(86) Internationale Anmeldenummer: PCT/EP2017/068393
(87) Internationale Veröffentlichungsnummer: WO 2018/041467

(56) Entgegenhaltungen:
- EP-A1- 1 126 253
- WO-A1-95/35484
- WO-A2-2004/042199
- GB-A- 2 322 988
- US-A- 4 507 658
- US-B1- 6 337 654

## Beschreibung

Die Erfindung betrifft ein Verfahren zur Überwachung eines Heißgasbereichs einer Gasturbine gemäß dem Gattungsbegriff des Anspruchs 1 sowie eine Anordnung zur Überwachung eines Heißgasbereichs einer Gasturbine gemäß dem Gattungsbegriff des Anspruchs 6.

Moderne Gasturbinen weisen in der Turbine keramikbeschichtete Lauf- und Leitschaufeln auf. Diese als so genannte "Temperature Barrier Coating" (TBC) bekannte Keramikschicht wird durch verschiedene Technologien auf die metallische Grundstruktur der Schaufeln aufgebracht und weist Schichtdicken im Bereich weniger Zehntelmillimeter auf.

Problematisch bei diesem Ansatz ist es, dass durch langandauernde Beaufschlagung der Schaufeln mit extrem hohen Temperaturen oder ausgelöst durch Überfeuerungen oder andere Brennerfehlfunktionen es jedoch vorkommen kann, dass die keramische Hitzeschutzschicht beschädigt wird und sich teilweise löst oder abplatzt.

Dadurch liegt die metallische Grundstruktur der Turbinenschaufeln frei und weitere starke und schnell fortschreitende Schädigungen sind die Folge. Im extremen Fall kann dies zu einem Turbinentotalschaden führen, welcher wiederum einen Schaden im Bereich mehrerer Millionen Euro verursacht.

Es ist daher von hohem Interesse, den Zustand der keramischen Schutzschicht zu überwachen. Bisher ist es bekannt, dass eine detaillierte und flächendeckend vollständige Inspektion des Zustandes der Keramikbeschichtung nur durch eine Stillsetzung und manuelle Kontrolle durchzuführen. Dies ist jedoch aufwändig und kostentreibend, daher sind so genannte

Real-Time Infrarotkameras entwickelt worden, die eine, aus einer Kontrastabbildung im sichtbaren/unsichtbaren Infrarotbereich gebildeten, Bildinformation sowohl von der keramischen Schutzschicht der drehenden Laufschaufeln als auch eines begrenzten Sichtfeldes einiger Leitschaufeln, liefern.

Diese Lösung hat jedoch den Nachteil hoher Kosten aufgrund des Kamerasystems selbst sowie auch aufgrund der Bereitstellung des erforderlichen optischen Zugangs herausgestellt.

Aus der WO 2004/042199 A2 ist eine Strömungsmaschine bekannte, bei der im Heißgasbereich eine Koaxialantenne angeordnet ist, die eine Ladungsverteilung auf Schaufeln, die bei Beschädigung des Keramiküberzügs der Schaufeln auftritt, durch eine Feldstärkemessung erfasst.

Eine auf einer Radarmessung basierende Überwachung einer Turbine ist aus US 4,507,658 bekannt.

Die der Erfindung zugrundeliegende Aufgabe ist es daher eine Überwachungstechnologie anzugeben, die die Nachteile des Standes der Technik überwindet.

Diese Aufgabe wird durch das Verfahren zur Überwachung von Gasturbinen gemäß dem Gattungsbegriff des Anspruchs 1 durch dessen kennzeichnende Merkmale gelöst. Ferner wird diese Aufgabe durch die Anordnung zur Überwachung von Gasturbinen Anspruch 6 gelöst. Vorteilhafte Weiterbildungen der Erfindung sind in den abhängigen Ansprüchen angegeben.

Vorzugsweise wird gemäß einer Weiterbildung der Erfindung wird als Teile des Heißgasraums zumindest ein Teil der Schaufel der Gasturbine durch die Radaranordnung bildgebend erfasst.

Ist der Betrag der zeitlichen Abstände der Wiederholung der bildgebenden Erfassung derart synchron mit der Umdrehungszahl der Schaufeln, insbesondere in einem Wertebereich von 1µs - 2 µs, einstellbar, so dass eine zu erfassende sich drehende Schaufel für die Bildgebung statisch erscheint, ist eine Weiterbildung gegeben, die den sich sehr schnell drehenden Rotor auf dem Radara"foto" statisch erscheinen, so dass Abplatzungen gut erfasst werden können.

Unter Anderem für die Gewährleistung einer guten Ortsauflösung wird die Radaranordnung derart eingerichtet und betrieben, dass der Teil der Schaufel optisch als, insbesondere 16, separierte Teilbereiche erfasst wird.

Bei einer Weiterbildung der Erfindung werden die Radaranordnung derart betrieben wird, dass Strahlformungsverfahren, erzeugt durch beispielsweise, auch als "Digital Beamforming" bezeichnete, digitales Strahlformungsverfahren und/oder von phasengesteuerten Gruppenantennen, so genanntes "Phased Array" durchgeführt. Dies trägt zur Verbesserung der Aufnahmen und somit führt zu akkurateren Ergebnissen bei der Auswertung.

Erfindungsgemäß wird dabei wird die Radaranordnung als so genannte "Synthetic Aperture Radar" Einrichtung betrieben.

Bei der erfindungsgemäßen Anordnung handelt es sich um eine Anordnung gemäß Anspruch 6.

Die erfindungsgemäße Anordnung ist eine Implementierung, die die Vorteile des erfindungsgemäßen Verfahrens besonders vorteilhaft zur Wirkung bringt. Dies gilt ebenso für die folgenden Weiterbildungen der Anordnung, die jeweils die Vorteile der entsprechenden Verfahrensweiterbildungen besonders geeignet zur Wirkung bringen.

Eine Weiterbildung der Anordnung ist dabei dadurch gegeben, dass die Radaranordnung, der Hohlleiter und/oder die Enden des Hohlleiters derart ausgestaltet und miteinander funktional verbunden sind, dass als Teile des Heißgasraums zumindest ein Teil der Schaufel der Gasturbine durch die Radaranordnung bildgebend erfasst wird.

Ferner kann die Anorndung derart weitergebildet werden, dass die Radaranordnung derart ausgestaltet ist, dass der Betrag der zeitlichen Abstände der Wiederholung der bildgebenden Erfassung derart synchron mit der Umdrehungszahl der Schaufeln, insbesondere in einem Wertebereich von 1µs - 2µs, einstellbar ist, so dass eine zu erfassende sich drehende Schaufel für die Bildgebung statisch erscheint.

Ist die Radaranordnung derart eingerichtet und mit Hohlleiter und/oder Heißgasraum funktional verbunden, dass der Teil der Schaufel optisch als, insbesondere 16, separierte Teilbereiche erfasst wird, wird die Implementierung des erfindungsgemäßen Verfahrens zusätzlich gestützt.

Vorzugsweise ist die Radaranordnung derart ausgestaltet, dass Strahlformungsverfahren, erzeugt durch beispielsweise, auch als "Digital Beamforming" bezeichnete, digitales Strahlformungsverfahren und/oder von phasengesteuerten Gruppenantennen, so genanntes "Phased Array" durchgeführt werden.

Erfindungsgemäß ist die Radaranordnung als so genannte "Synthetic Aperture Radar" Einrichtung ausgestaltet.

Wenn die Anordnung derart weitergebildet ist, dass die Verbindung von Radaranordnung und Heißgasraum derart ausgestaltet ist, dass sie durch eine Vielzahl nach Art eines Bündels angeordneter Hohlleiter gebildet wird, ist beispielsweise Redundanz gegeben, die den Ausfall einzelner Hohlleiter durch irgendwelche Verunreinigungen aus dem Inneren der Turbine abfängt.

Mit der Erfindung wird also ein optischer Zugang zu einem Heißgasraum möglich, welcher den enormen Anforderungen, die in einem Heißgasraum existieren, wie beispielsweise Temperaturen in einem Temperaturbereich von bis zu 1700°C und sowie einem Druck von ∼20 bar, Rechnung trägt.

Auch damit dem durch die dort vorliegenden erheblichen Strömungsturbulenzen erforderlichen sonst extrem hohen Bauaufwand und den tiefgreifenden Designkompromissen der Turbinenkomponenten Rechnung getragen werden.

Durch den durch den gemäß Erfindung vorgesehenen Einsatz einer Radaranordnung an einem einseitig verschlossenen Hohlleiter muss optische Pfad nicht zweingend permanent mit Luft gekühlt werden, an die zudem die Anforderung gestellt wird, dass sie sehr sauber sein muss, was einen hohen Aufwand für Filterung der Luft bedeuten würde.

Zur Bereitstellung der Kühlluft mit erheblichen Mengen und auf hohem Druckniveau wären ferner sehr umfangreiche technische Anlagen erforderlich, welche ihrerseits einen hohen Überwachungs- und Regelungsaufwand erfordern. Auch würde die eingemischte Kühlluft den Wirkungsgrad der Maschine nachteilig beeinflussen.

Die Anwendung der Erfindung und/oder seiner Weiterbildungen wird bei erfindungsgemäßer Umsetzung keine aktive Kühlung für das
System benötigen. Dadurch werden einerseits erheblichste Kostenvorteile erzielt und andererseits wird die negative Beeinflussung des thermodynamischen Kreisprozesses durch Kaltlufteintritt vollständig vermieden. Es wird somit Wirkungsgrad der sie einsetzenden Anlage ebenfalls erhöhen.

Unterstützt wird dies, wenn die Erfindung, die unter anderem in der Anwendung einer bildgebenden Radartechnologie besteht, durch ein Digital Beamforming oder ein Phased Array oder SAR oder durch Verwendung konventioneller Strahlformungsverfahren oder Rotman-Linsen oder Ähnlichem zur Bestimmung des Zustandes der Keramikbeschichtung im laufenden Betrieb der Gasturbine gekennzeichnet ist.

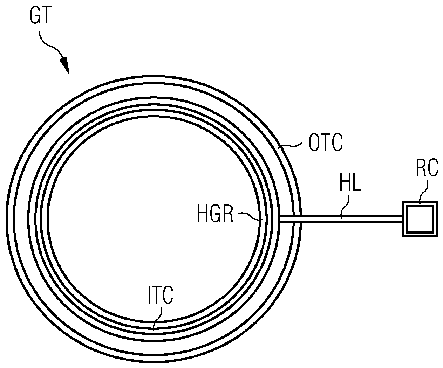

Weitere Vorteile und Einzelheiten der Erfindung werden anhand eines in der Figur dargestellten Ausführungsbeispiels erläutert. Es zeigt diese einzige
- Figur: eine schematische Darstellung eines möglichen Ausführungsbeispiels der erfindungsgemäßen Anordnung.

Die Figur zeigt schematisch eine mögliche Anordnung der Komponenten im Turbinenbereich einer schweren Gasturbine GT.

Zu erkennen ist eine Turbinenrotorbereich HGR, der auch als Heißgasraum im Sinne der Erfindung bezeichnet ist und die zu überwachenden Turbinenschaufeln (nicht dargestellt) beherbergt. Dieser Heißgasraum HGR ist von einer inneren Ummantelung ("Inner Turbine Case") ITC - in diesem Ausführungsbeispiel mündet der erfindungsgemäße Hohlraum also nicht offen in den Heißgasraum, sondern ist derart ausgestaltet, dass er derart für Radarwellen durchlässig vor Hitze geschirmt ist, dass die Radarwellen in den Heißbereich gelangen - und einer äußeren Ummantelung ("Outer Turbine Case") OTC umhüllt.

Ferner ist zu erkennen, dass außerhalb der Gasturbine GT eine Radaranordnung RC angeordnet ist, wobei der in der Darstellung gewählte Abstand zur Gasturbine GT keine Indikation für das Ausmaß des Abstands von Radaranordnung RC darstellen soll.

Das Radarsystem RC ist dabei so gestaltet, dass sowohl eine hinreichende Ortsauflösung als auch eine hinreichende Kontrastauflösung erreicht wird. Als hinreichende Ortsauflösung wird dabei bei den derzeit bekannten Turbinen ein Wert angesehen, der die abzubildende Schaufel in mindestens 16 verschiedene Bereiche unterteilen kann und dafür eine Kontrastauflösung liefert, die eine eindeutige Erkennung einer teilweisen oder vollständigen Abplatzung in diesem Bereich ermöglicht. Hiervon abweichende größere oder geringere Aufteilung ist je nach eingesetzten Turbinen möglich.

Gemäß Ausführungsbeispiel ist die Radaranordnung RC mit einem Bildverarbeitungssystem und einem Auswertesystem zusammengefasst, wobei das elektronische Auswertesystem so gestaltet ist, dass die zeitliche Auflösung, also das bildliche Erfassung(Foto), der mit hoher Geschwindigkeit vorbeilaufenden Schaufeln ermöglicht wird.

Hierzu ist bei gängigen Turbinen eine "Belichtungszeit" im Bereich von 1..2 µs erforderlich, um die Schaufeln "einzufrieren". Das angeschlossene Bildverarbeitungssystem ist dabei so ausgestaltet und mit dem Auswertesystem funktional verbunden, das im Falle einer Abplatzung des "Temperature Barrier Coating" (TBC), der Keramik der keramikbeschichteten Lauf- und Leitschaufeln ein Alarm ausgelöst wird.

Mit der Erfindung werden u.a. die folgenden Vorteile erzielt:
1. Die Anwendung dieser Technologie wird bei erfindungsgemäßer Umsetzung keine aktive Kühlung für das System benötigen. Dadurch werden einerseits erheblichste Kostenvorteile erzielt und andererseits wird die negative Beeinflussung des thermodynamischen Kreisprozesses durch Kaltlufteintritt vollständig vermieden.
2. Es wird abgeschätzt, daß ein Komplettsystem nur ca. 10..25% der Kosten eines Infrarotkamerasystemsverursachen wird.
3. Die Anwendung dieser Technologie wird bei erfindungsgemäßer Umsetzung keine aktive Kühlung für das System benötigen. Dadurch werden einerseits erheblichste Kostenvorteile erzielt und andererseits wird die negative Beeinflussung des thermodynamischen Kreisprozesses durch Kaltlufteintritt vollständig vermieden.
   Erzielt wird dies durch die Anwendung der Radartechnologie, die keinen optischen Zugang zum Heißgasbereich HGR erfordert.
4. Durch die Anwendung der Technologie ergeben sich erhebliche Vorteile im langjährigen Betrieb der Gasturbine GT. Die Möglichkeit einer sofortigen Warnung im Fehlerfall verhindert Turbinenfolgeschäden im Millionenbereich.

Die permanente Zustandsinformation liefert ein langfristiges und kontinuierliches Bild über den Alterungsprozess jeder individuellen Schaufel. Das ermöglicht eine zuverlässige und kostenoptimale Planung des Instandhaltungsprozesses und der Planung der Bereitstellung der sehr teuren Turbinenschaufeln.

Durch die beiden letztgenannten Vorteile können so sehr hohe Kosteneinsparpotentiale für jede Kraftwerksanlage im Millionenbereich realisiert werden.

## Patentansprüche

1. Verfahren zur Überwachung eines Heißgasbereichs (HGR) einer Gasturbine (GT), **dadurch gekennzeichnet, dass**
a) der Heißgasbereich mit einer an einem dem Heißgasbereich fernen Ort an der Gasturbine als so genannte "Synthetic Aperture Radar" Einrichtung betriebenen bildgebenden Radaranordnung (RC) mittels mindestens einem Hohlleiter (HL) verbunden wird,
b) der Hohlleiter an dem Ende an dem die Radaranordnung betrieben wird derart verschlossen ist, dass die Radaranordnung außerhalb des verschlossen Hohlraums betrieben wird und an dem Ende dem Heißgasbereich zugewandten Ende des Hohlleiters derart ausgestaltet ist, dass der Hohlleiter in den Heißgasbereich offen mündet oder derart für Radarwellen durchlässig vor Hitze geschirmt ist, dass die Radarwellen in den Heißbereich gelangen,
c) die Radaranordnung derart angesteuert und funktional über den Hohlleiter mit dem Heißgasraum verbunden ist, dass in zeitlichen Abständen zumindest Teile des Heißgasraums durch die Radaranordnung in zeitlichen Abständen wiederholt bildgebend erfasst werden,
d) die erfassten Bilddaten einer Auswertungseinrichtung zugeführt werden,
e) abhängig vom Ergebnis der Auswertungseinrichtung eine Wartung, insbesondere durch Auslösen eines Alarms, initiiert wird.

2. Verfahren nach dem vorhergehenden Anspruch, **dadurch gekennzeichnet, dass** als Teile des Heißgasraums zumindest ein Teil der Schaufel der Gasturbine durch die Radaranordnung bildgebend erfasst wird.

3. Verfahren nach dem vorhergehenden Anspruch, **dadurch gekennzeichnet, dass** der Betrag der zeitlichen Abstände der Wiederholung der bildgebenden Erfassung derart synchron mit der Umdrehungszahl der Schaufeln, insbesondere in einem Wertebereich von 1µs - 2 µs, einstellbar ist, so dass eine zu erfassende sich drehende Schaufel für die Bildgebung statisch erscheint.

4. Verfahren nach einem der vorhergehenden Ansprüche, **dadurch gekennzeichnet, dass** die Radaranordnung derart eingerichtet und betrieben wird, dass der Teil der Schaufel optisch als, insbesondere 16, separierte Teilbereiche erfasst wird.

5. Verfahren nach einem der vorhergehenden Ansprüche, **dadurch gekennzeichnet, dass** die Radaranordnung derart betrieben wird, dass Strahlformungsverfahren, erzeugt durch beispielsweise, auch als "Digital Beamforming" bezeichnete, digitales Strahlformungsverfahren und/oder von phasengesteuerten Gruppenantennen, so genanntes "Phased Array" durchgeführt werden.

6. Anordnung zur Überwachung eines Heißgasbereichs (HGR) einer Gasturbine (GT), **dadurch gekennzeichnet, dass**
a) eine an einem dem Heißgasbereich fernen Ort an der Gasturbine als so genannte "Synthetic Aperture Radar" Einrichtung betriebenen bildgebenden Radaranordnung (RC), welche mittels mindestens einem Hohlleiter (HL) mit dem Heißgasbereich verbunden ist,
b) ein Hohlleiter, der an dem Ende an dem die Radaranordnung angeordnet ist derart verschlossen ist, dass die Radaranordnung außerhalb des verschlossen Hohlraums platziert ist und an dem Ende dem Heißgasbereich zugewandten Ende des Hohlleiters derart ausgestaltet ist, dass der Hohlleiter in den Heißgasbereich offen mündet oder derart für Radarwellen durchlässig vor Hitze geschirmt ist, dass die Radarwellen in den Heißbereich gelangen,
c) die Radaranordnung derart angesteuert und funktional über den Hohlleiter mit dem Heißgasraum verbunden ist, dass in zeitlichen Abständen zumindest Teile des Heißgasraums durch die Radaranordnung in zeitlichen Abständen wiederholt bildgebend erfasst werden,
d) eine Auswertungseinrichtung derart angeordnet und mit der Radaranordnung derart funktional verbunden ist, dass ihr die erfassten Bilddaten zugeführt werden,
e) die Auswertungseinrichtung derart ausgestaltet ist, dass eine Wartung, insbesondere durch Auslösen eines Alarms, initiiert wird.

7. Anordnung nach dem vorhergehenden Anspruch, **dadurch gekennzeichnet, dass** die Radaranordnung, der Hohlleiter und/oder die Enden des Hohlleiters derart ausgestaltet und miteinander funktional verbunden sind, dass als Teile des Heißgasraums zumindest ein Teil der Schaufel der Gasturbine durch die Radaranordnung bildgebend erfasst wird.

8. Anordnung nach dem vorhergehenden Anspruch, **dadurch gekennzeichnet, dass** die Radaranordnung derart ausgestaltet ist, dass der Betrag der zeitlichen Abstände der Wiederholung der bildgebenden Erfassung derart synchron mit der Umdrehungszahl der Schaufeln, insbesondere in einem Wertebereich von 1µs - 2µs, einstellbar ist, so dass eine zu erfassende sich drehende Schaufel für die Bildgebung statisch erscheint.

9. Anordnung nach einem der Ansprüche 7 bis 8, **dadurch gekennzeichnet, dass** die Radaranordnung derart eingerichtet und mit Hohlleiter und/oder Heißgasraum funktional verbunden ist, dass der Teil der Schaufel optisch als, insbesondere 16, separierte Teilbereiche erfasst wird.

10. Anordnung nach einem der Ansprüche 7 bis 9, **dadurch gekennzeichnet, dass** die Radaranordnung derart ausgestaltet ist, dass Strahlformungsverfahren, erzeugt durch beispielsweise, auch als "Digital Beamforming" bezeichnete, digitales Strahlformungsverfahren und/oder von phasengesteuerten Gruppenantennen, so genanntes "Phased Array" durchgeführt werden.

11. Anordnung nach einem der Ansprüche 7 bis 10, **dadurch gekennzeichnet, dass** die Verbindung von Radaranordnung und Heißgasraum derart ausgestaltet ist, dass sie durch eine Vielzahl nach Art eines Bündels angeordneter Hohlleiter gebildet wird.

## Claims

1. Method for monitoring a hot gas region (HGR) of a gas turbine (GT), **characterized in that**
a) the hot gas region is connected to an imaging radar assembly (RC), which is operated at a location on the gas turbine which is remote from the hot gas region, as what is referred to as a "synthetic aperture radar" device, by means of at least one waveguide (HL),
b) the waveguide is closed off at the end at which the radar assembly is operated, in such a way that the radar assembly is operated outside the closed-off waveguide and is configured at the end of the waveguide facing the hot gas region, in such a way that the waveguide leads in an open fashion into the hot gas region or is shielded against heat while being permeable to radar waves, and that the radar waves pass into the hot region,
c) the radar assembly is actuated and functionally connected to the hot gas area via the waveguide, in such a way that at time intervals at least parts of the hot gas area are captured in an imaging fashion repeatedly at time intervals by the radar assembly,
d) the captured image data is fed to an evaluation device,
e) maintenance is initiated in accordance with the result of the evaluation device, in particular by triggering an alarm.

2. Method according to the preceding claim, **characterized in that** at least part of the blade of the gas turbine is captured in an imaging fashion by the radar assembly as parts of the hot gas area.

3. Method according to the preceding claim, **characterized in that** the absolute value of the time intervals of the repetition of the imaging capturing can be adjusted in synchronism with the rotational speed of the blades, in particular in a value range from 1 µs - 2 µs, so that a rotating blade which is to be captured appears static for the imaging.

4. Method according to one of the preceding claims, **characterized in that** the radar assembly is configured and operated in such a way that part of the blade is captured optically as, in particular, 16, separate component regions.

5. Method according to one of the preceding claims, **characterized in that** the radar assembly is operated in such a way that beam-forming methods, generated by, for example, a digital beam-forming method, also referred to as "digital beam-forming", and/or by phase-controlled group antennas, also referred to as "phased array", are carried out.

6. Assembly for monitoring a hot gas region (HGR) of a gas turbine (GT), **characterized in that**
a) an imaging radar assembly (RC) which is operated at a location remote from the hot gas region on the gas turbine, as what is referred to as a "synthetic aperture radar" device is connected to the hot gas region by means of at least one waveguide (HR),
b) a waveguide which is closed off at the end at which the radar assembly is arranged, in such a way that the radar assembly is positioned outside the enclosed waveguide and is configured at the end of the waveguide facing the hot gas region, in such a way that the waveguide leads in an open fashion into the hot gas region or is shielded against heat while being permeable to radar waves, in such a way that the radar waves pass into the hot region,
c) the radar assembly is actuated and functionally connected to the hot gas area via the waveguide, in such a way that at time intervals at least parts of the hot gas area are captured in an imaging fashion repeatedly at time intervals by the radar assembly,
d) an evaluation device is arranged and functionally connected to the radar assembly in such a way that the acquired image data is fed to it,
e) the evaluation device is configured in such a way that maintenance is initiated, in particular by triggering an alarm.

7. Assembly according to the preceding claim, **characterized in that** the radar assembly, the waveguide and/or the ends of the waveguide are configured and functionally connected to one another in such a way that at least part of the blade of the gas turbine is captured in an imaging fashion by the radar assembly as parts of the hot gas area.

8. Assembly according to the preceding claim, **characterized in that** the radar assembly is configured in such a way that the absolute value of the time intervals of the repetition of the imaging capturing can be adjusted in synchronism with the rotational speed of the blades, in particular in a value range from 1 µs - 2 µs, so that a rotating blade which is to be captured appears static for the imaging.

9. Assembly according to one of Claims 7 to 8, **characterized in that** the radar assembly is configured and functionally connected to the waveguide and/or hot gas area in such a way that the part of the blade is captured optically as, in particular 16, separate component regions.

10. Assembly according to one of Claims 7 to 9, **characterized in that** the radar assembly is configured in such a way that beam-forming methods, generated by, for example a digital beam-forming method, also referred to as "digital beam-forming", and/or by phase-controlled group antennas, referred to as "phased array", are carried out.

11. Assembly according to one of Claims 7 to 10, **characterized in that** the connection of radar assembly and hot gas area is configured in such a way that it is formed by a multiplicity of waveguides arranged in the manner of bundle.

## Revendications

1. Procédé pour la surveillance d'une zone de gaz chauds (HGR) d'une turbine à gaz (GT),
**caractérisé en ce que**
a) la zone de gaz chauds est reliée au moyen d'au moins un guide d'ondes (HL) à un système radar d'imagerie (RC) fonctionnant sous la forme d'un dispositif appelé « Synthetic Aperture Radar » au niveau d'un emplacement sur la turbine à gaz éloigné de la zone de gaz chauds,
b) le guide d'ondes est fermé à l'extrémité à laquelle le système radar fonctionne, de telle sorte que le système radar fonctionne à l'extérieur de l'espace creux fermé et soit configuré, à l'extrémité du guide d'ondes tournée vers la zone de gaz chauds, de telle sorte que le guide d'ondes débouche de manière ouverte dans la zone de gaz chauds ou soit protégé de la chaleur tout en laissant passer les ondes radar de telle sorte que les ondes radar parviennent à la zone chaude,
c) le système radar est commandé et relié fonctionnellement à l'espace de gaz chauds par le biais du guide d'ondes de telle sorte qu'à des intervalles temporels, au moins des parties de l'espace de gaz chauds soient détectées par imagerie par le système radar de manière répétée à des intervalles temporels,
d) les données d'image détectées sont acheminées à un dispositif d'évaluation,
e) en fonction du résultat du dispositif d'évaluation, un avertissement est initié, en particulier par déclenchement d'une alarme.

2. Procédé selon la revendication précédente, **caractérisé en ce qu'**en tant que parties de l'espace de gaz chauds, au moins une partie de l'aube de la turbine à gaz est détectée par imagerie par le système radar.

3. Procédé selon la revendication précédente, **caractérisé en ce que** le montant des intervalles temporels de la répétition de la détection par imagerie est ajustable de manière synchrone avec le nombre de tours des aubes, en particulier dans une gamme de valeurs allant de 1 µs à 2 µs, de telle sorte qu'une aube en rotation à détecter apparaisse statique pour l'imagerie.

4. Procédé selon l'une des revendications précédentes, **caractérisé en ce que** le système radar est conçu et fonctionne de telle sorte que la partie de l'aube soit détectée optiquement sous la forme de, en particulier 16, zones partielles séparées.

5. Procédé selon l'une des revendications précédentes, **caractérisé en ce que** le système radar fonctionne de telle sorte que soient mis en œuvre des procédés de formation de faisceau, produits par exemple par des procédés de formation de faisceau numérique, également désignés sous le nom de « Digital Beamforming », et/ou par des antennes réseau à commande de phase, appelées « Phased Array ».

6. Système pour la surveillance d'une zone de gaz chauds (HGR) d'une turbine à gaz (GT),
**caractérisé en ce que**
a) un système radar d'imagerie (RC) fonctionnant sous la forme d'un dispositif appelé « Synthetic Aperture Radar » au niveau d'un emplacement sur la turbine à gaz éloigné de la zone de gaz chauds est relié à la zone de gaz chauds au moyen d'au moins un guide d'ondes (HL),
b) un guide d'ondes est fermé à l'extrémité à laquelle le système radar est disposé, de telle sorte que le système radar soit placé à l'extérieur de l'espace creux fermé et soit configuré, à l'extrémité du guide d'ondes tournée vers la zone de gaz chauds, de telle sorte que le guide d'ondes débouche de manière ouverte dans la zone de gaz chauds ou soit protégé de la chaleur tout en laissant passer les ondes radar de telle sorte que les ondes radar parviennent à la zone chaude,
c) le système radar est commandé et relié fonctionnellement à l'espace de gaz chauds par le biais du guide d'ondes de telle sorte qu'à des intervalles temporels, au moins des parties de l'espace de gaz chauds soient détectées par imagerie par le système radar de manière répétée à des intervalles temporels,
d) un dispositif d'évaluation est disposé et relié fonctionnellement au système radar de telle sorte que les données d'image détectées y soient acheminées,
e) le dispositif d'évaluation est configuré de telle sorte qu'un avertissement soit initié, en particulier par déclenchement d'une alarme.

7. Système selon la revendication précédente, **caractérisé en ce que** le système radar, le guide d'ondes et/ou les extrémités du guide d'ondes sont configurés et reliés fonctionnellement les uns aux autres de telle sorte qu'en tant que parties de l'espace de gaz chauds, au moins une partie de l'aube de la turbine à gaz soit détectée par imagerie par le système radar.

8. Système selon la revendication précédente, **caractérisé en ce que** le système radar est configuré de telle sorte que le montant des intervalles temporels de la répétition de la détection par imagerie soit ajustable de manière synchrone avec le nombre de tours des aubes, en particulier dans une gamme de valeurs allant de 1 µs à 2 µs, de telle sorte qu'une aube en rotation à détecter apparaisse statique pour l'imagerie.

9. Système selon l'une des revendications 7 à 8, **caractérisé en ce que** le système radar est conçu et relié fonctionnellement au guide d'ondes et/ou à l'espace de gaz chauds de telle sorte que la partie de l'aube soit détectée optiquement sous la forme de, en particulier 16, zones partielles séparées.

10. Système selon l'une des revendications 7 à 9, **caractérisé en ce que** le système radar est configuré de telle sorte que soient mis en œuvre des procédés de formation de faisceau, produits par exemple par des procédés de formation de faisceau numérique, également désignés sous le nom de « Digital Beamforming », et/ou par des antennes réseau à commande de phase, appelées « Phased Array ».

11. Système selon l'une des revendications 7 à 10, **caractérisé en ce que** la liaison du système radar et de l'espace de gaz chauds est configurée de telle sorte qu'elle soit formée par une pluralité de guides d'onde disposés à la manière d'un paquet.
